(19) Europäisches Patentamt
European Patent Office
Office européen des brevets

(11) EP 0 944 052 A2

(12) **EUROPEAN PATENT APPLICATION**

(43) Date of publication:
**22.09.1999 Bulletin 1999/38**

(51) Int. Cl.$^6$: **G11B 11/10**

(21) Application number: **99105305.9**

(22) Date of filing: **15.03.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **20.03.1998 JP 7287798**

(71) Applicant: **FUJITSU LIMITED**
**Kawasaki-shi, Kanagawa 211-8588 (JP)**

(72) Inventors:
- **Hasegawa, Shinya**
**c/o Fujitsu Limited**
**Kawasaki-shi, Kanagawa 211-8588 (JP)**
- **Tawa, Fumihiro**
**c/o Fujitsu Limited**
**Kawasaki-shi, Kanagawa 211-8588 (JP)**

(74) Representative:
**Seeger, Wolfgang, Dipl.-Phys.**
**Georg-Hager-Strasse 40**
**81369 München (DE)**

# (54) Optical information storage unit

(57) An optical information storage unit includes a light source emitting a light, an objective lens imaging the light emitted from the light source on a recording medium, a servo detecting part for detecting a servo detection signal based on a reflected light from the recording medium, and a servo control part for controlling an imaging position of the light on the recording medium based on the servo detection signal. The optical information storage unit further includes an inclination control part for controlling a relative inclination of the recording medium and the objective lens, by controlling the servo control part based on the servo detection signal detected by the servo detecting part.

FIG. 1

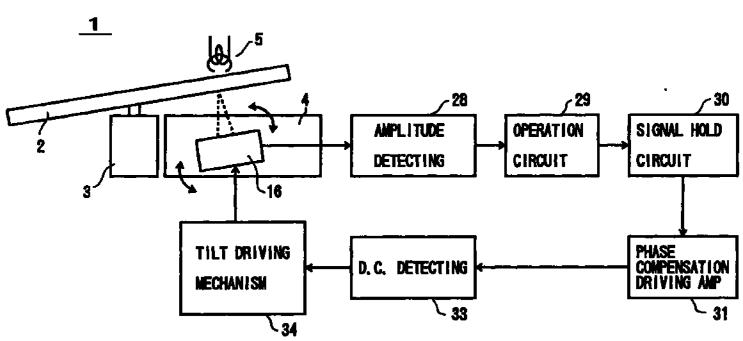


EP 0 944 052 A2

## Description

### BACKGROUND OF THE INVENTION

1. Field of the Invention

The present invention generally relates to optical information storage units, and more particularly to an optical information storage unit which carries out a servo operation based on a reflected light from a recording medium.

Recently, due to the improved performance of computers, it has become necessary to use storage units having a large storage capacity. Hard disk units and magneto-optical disk units have been considered as storage units capable of satisfying such demands. Optical information storage units such as the magneto-optical disk unit are considered particularly suited for use as the storage unit of the computer, because a recording medium is removable and a large storage capacity can be realized although the size of the optical information storage unit is relatively small, thereby making the optical information storage unit easy to use.

With respect to such optical information storage units, there are demands to further improve the storage capacity by further increasing the recording density of the recording medium.

2. Description of the Related Art

In the conventional magneto-optical disk unit, there are demands to make a beam spot of the light extremely small in order to further improve the recording density. For this reason, there is a tendency to increase a numerical aperture (NA) of an objective lens. However, when the NA of the objective lens becomes large, the beam spot on the recording medium is greatly deformed if the objective lens is not parallel to the recording medium due to an error introduced during an assembling stage of an optical head. An error of a detection signal detected from the recording medium is generated by such a deformation of the beam spot. Consequently, it is necessary to assemble the optical head with a high precision, thereby increasing the number of processes, deteriorating the productivity and increasing the cost of the magneto-optical disk unit.

In addition, the beam spot on the recording medium is also deformed if the recording medium becomes inclined with respect to the objective lens when the recording medium is inserted into a disk drive or, if the recording medium is tilted due to a warp of the recording medium or a recording surface deviation which is introduced as the recording medium is rotated by a spindle motor. In such cases where the beam spot is deformed, a read performance greatly deteriorates.

As a method of detecting a relative error between the lens and the recording medium, there is a conventional proposed method which uses sensors at 3 points.

Further methods of detecting the relative error between the lens and the recording medium are proposed in Japanese Laid-Open Patent Applications No.1-173334, No.61-48138 and No.2-14437, for example.

However, according to the conventional proposed method which uses the sensors at the 3 points and the methods proposed in the Japanese Laid-Open Patent Applications No.1-173334, No.61-48138 and No.2-14437, it is necessary to provide on the optical head a means for detecting the inclination or a means for correcting the inclination. As a result, considerable space is occupied by such means, and the weight of the disk unit increases. Further, due to the increased weight, a moving speed of an actuator during a seek operation inevitably deteriorates, thereby limiting these methods for application on a low-speed disk unit. In addition, since the construction of the disk unit becomes complex due to the provision of such means, the assembling process of the disk unit becomes complex and the disk unit becomes expensive.

In addition, according to the method proposed in the Japanese Laid-Open Patent Application No.61-48138, the entire optical system is tilted with respect to the recording medium. For this reason, the weight of the optical head becomes large, thereby making the response of the optical head poor. Furthermore, the optical disk becomes large due to the provision of the means for tilting the entire optical system.

### SUMMARY OF THE INVENTION

Accordingly, it is a general object of the present invention to provide a novel and useful optical information storage unit in which the problems described above are eliminated.

Another and more specific object of the present invention is to provide an optical information storage unit which eliminates the problems described above, by detecting an inclination of an objective lens with respect to a recording medium, without providing a special detecting means, and adjusting the inclination of the objective lens with respect to the recording medium so that the objective lens becomes parallel to the recording medium.

Still another object of the present invention is to provide an optical information storage unit comprising a light source emitting a light, an objective lens imaging the light emitted from the light source on a recording medium, a servo detecting means for detecting a servo detection signal based on a reflected light from the recording medium, and a servo control means for controlling an imaging position of the light on the recording medium based on the servo detection signal, is characterized by: an inclination control means for controlling a relative inclination of the recording medium and the objective lens, by controlling the servo control means based on the servo detection signal detected by the servo detecting means. According to the optical information storage unit of the present invention, a diffraction phenomenon occurs in the reflected light from the adjacent track on the recording medium depending on the relative inclination of the recording medium and the objective lens, and a signal level of the servo detection signal changes depending on this diffraction phenomenon. Hence, it is possible to detect the relative inclination of the recording medium and the objective lens based on the servo detection signal which is detected by the servo detecting means. In other words, the relative inclination of the recording medium and the objective lens can be detected, without the need to provide a detecting means exclusively for detecting the relative inclination of the recording medium and the objective lens. In addition, when the relative inclination of the recording medium and the objective lens is controlled by controlling the servo control means, it is possible to reduce both the weight and size of the optical information storage unit as compared to a case where a driving means is additionally provided exclusively for driving the optical system.

A further object of the present invention is to provide the optical information storage unit described above which is characterized in that the inclination control means controls the relative inclination of the recording medium and the objective lens based on the servo detection signal detected by the servo detecting means so that an amplitude of the servo detection signal becomes a maximum. According to the optical information storage unit of the present invention, since the servo detection signal becomes a maximum when the relative inclination of the recording medium and the objective lens is zero, that is, when the recording medium and the objective lens are parallel to each other, it is possible to make the recording medium and the objective lens to become approximately parallel to each other by controlling the relative inclination of the recording medium and the objective lens so tat the servo detection signal becomes the maximum.

Another object of the present invention is to provide an optical information storage unit described above which is characterized in that the inclination control means controls the relative inclination of the recording medium and the objective lens depending on a normalized amplitude of the servo detection signal detected by the servo detecting means. According to the optical information storage unit of the present invention, it is possible to detect the relative inclination of the recording medium and the objective lens based on the normalized amplitude of the servo detection signal, because the servo detection signal having the normalized amplitude indicates a degree of the diffraction phenomenon caused by the relative inclination of the recording medium and the objective lens.

Still another object of the present invention is to provide the optical information storage unit described above which is characterized in that the inclination control means controls the relative inclination of the recording medium and the objective lens depending on a normalized jitter quantity of the recording medium by detecting and normalizing a jitter quantity of the recording medium, based on the servo detection signal detected by the servo detecting means. According to the optical information storage unit of the present invention, it is possible to detect the relative inclination of the recording medium and the objective lens based on the normalized jitter quantity of the recording medium, since the normalized jitter quantity of the recording medium indicates a degree of the diffraction phenomenon caused by the relative inclination of the recording medium and the objective lens.

A further object of the present invention is to provide the optical information storage unit described above which is characterized in that the inclination control means controls a focus direction of the objective lens, a direction of a track formed on the recording medium, and an inclination of the recording medium in a radial direction of the recording medium, based on the servo detection signal detected by the servo detecting means. According to the optical information storage unit of the present invention, it is possible to control the recording medium and the objective lens to become parallel to each other, regardless of the direction of the relative inclination of the recording medium and the objective lens, because the inclination of the objective lens in all directions can be controlled by controlling the focus direction of the objective lens, the direction of the track formed on the recording medium and the inclination of the recording medium in the radial direction thereof, based on the servo detection signal.

Another object of the present invention is to provide the optical information storage unit described above which is characterized in that: the servo control means includes a plurality of driving means for driving ends of the objective lens in a direction of the recording medium, and the inclination control means controls the relative inclination of the recording medium and the objective lens by independently driving the plurality of driving means. According to the optical information storage unit of the present invention, it is possible to independently move the ends of the objective lens in the direction of the recording medium, by independently controlling the plurality of driving means which form the servo control means. For this reason, the relative inclination of the recording medium and the objective lens can be controlled by tilting the objective lens.

Still another object of the present invention is to provide the optical information storage unit described above which is characterized in that the inclination control means controls the relative inclination of the recording medium and the objective lens by controlling an inclination of the objective lens. According to the optical information storage unit of the present invention, it is possible to control the relative inclination of the recording medium and the objective lens by controlling the inclination of the objective lens with respect to the recording medium.

A further object of the present invention is to provide an optical information storage unit comprising a light source emitting a light, an objective lens imaging the light emitted from the light source on a recording medium, a servo detecting means for detecting a servo detection signal based on a reflected light from the recording medium, a servo control means for controlling an imaging position of the light on the recording medium based on the servo detection signal, and a rotating means for rotating the recording medium, is characterized by: an inclination control means for controlling a relative inclination of the recording medium and the objective lens, by controlling an inclination of the rotating means based on the servo detection signal detected by the servo detecting means. According to the optical information storage unit of the present invention, it is possible to control the relative inclination of the recording medium and the objective lens by controlling the inclination of the recording medium. Hence, the weight and size of the optical information storage unit can be reduced, since it is unnecessary to additionally provide a driving means exclusively for driving the optical system.

Another object of the present invention is to provide the optical information storage unit described above which is characterized in that the inclination control means controls the relative inclination of the recording medium and the objective lens based on the servo detection signal detected by the servo detecting means so that an amplitude of the servo detection signal becomes a maximum. According to the optical information storage unit of the present invention, since the servo detection signal becomes a maximum when the relative inclination of the recording medium and the objective lens is zero, that is, when the recording medium and the objective lens are parallel to each other, it is possible to make the recording medium and the objective lens to become approximately parallel to each other by controlling the relative inclination of the recording medium and the objective lens so tat the servo detection signal becomes the maximum.

Still another object of the present invention is to provide the optical information storage unit described above which is characterized in that the inclination control means controls the relative inclination of the recording medium and the objective lens depending on a normalized amplitude of the servo detection signal detected by the servo detecting means. According to the optical information storage unit of the present invention, it is possible to detect the relative inclination of the recording medium and the objective lens based on the normalized amplitude of the servo detection signal, because the servo detection signal having the normalized amplitude indicates a degree of the diffraction phenomenon caused by the relative inclination of the recording medium and the objective lens.

A further object of the present invention is to provide the optical information storage unit described above which is characterized in that the inclination control means controls the relative inclination of the recording medium and the objective lens depending on a normalized jitter quantity of the recording medium by detecting and normalizing a jitter quantity of the recording medium, based on the servo detection signal detected by the servo detecting means. According to the optical information storage unit of the present invention, it is possible to detect the relative inclination of the recording medium and the objective lens based on the normalized jitter quantity of the recording medium, since the normalized jitter quantity of the recording medium indicates a degree of the diffraction phenomenon caused by the relative inclination of the recording medium and the objective lens.

Another object of the present invention is to provide the optical information storage unit described above which is characterized in that the inclination control means controls a focus direction of the objective lens, a direction of a track formed on the recording medium, and an inclination of the recording medium in a radial direction of the recording medium, based on the servo detection signal detected by the servo detecting means. According to the optical information storage unit of the present invention, it is possible to control the recording medium and the objective lens to become parallel to each other, regardless of the direction of the relative inclination of the recording medium and the objective lens, because the inclination of the objective lens in all directions can be controlled by controlling the focus direction of the objective lens, the direction of the track formed on the recording medium and the inclination of the recording medium in the radial direction thereof, based on the servo detection signal.

Other objects and further features of the present invention will be apparent from the following detailed description when read in conjunction with the accompanying drawings.

BRIEF DESCRIPTION OF THE DRAWINGS

FIG. 1 is a system block diagram showing a first embodiment of an optical information storage unit of the present invention;
FIG. 2 is a diagram showing the general construction of the first embodiment of the optical information storage unit;
FIG. 3 is a cross sectional view showing an important part of the first embodiment of the optical information storage unit;

FIG. 4 is a diagram showing an optical head of the first embodiment of the optical information storage unit;

FIG. 5 is a diagram showing optical patterns formed on a photodetector of the first embodiment of the optical information storage unit;

FIG. 6 is a diagram showing optical patterns formed on the photodetector when a laser beam is tilted in the first embodiment of the optical information storage unit;

FIG. 7 is a diagram showing a title angle of an objective lens versus a tracking error signal characteristic of the first embodiment of the optical information storage unit;

FIG. 8 is a plan view showing a tilt driving mechanism of the first embodiment of the optical information storage unit;

FIG. 9 is a side view showing the tilt driving mechanism of the first embodiment of the optical information storage unit;

FIG. 10 is a plan view showing an important part of the tilt driving mechanism of the first embodiment of the optical information storage unit;

FIG. 11 is a system block diagram showing a second embodiment of the optical information storage unit according to the present invention; and

FIG. 12 is a plan view showing a tilt driving mechanism of the second embodiment of the optical information storage unit.

DETAILED DESCRIPTION OF THE PREFERRED EMBODIMENTS

A description will be given of embodiments of an optical information storage unit according to the present invention. In the embodiments, the present invention is applied to a magneto-optical disk unit.

FIG. 1 is a system block diagram showing a first embodiment of the optical information storage unit according to the present invention.

A magneto-optical disk 2 engages with a spindle motor 3 in a state where the magneto-optical disk 2 is loaded into a magneto-optical disk unit 1. The magneto-optical disk 2 is rotated by the spindle motor 3 when recording information on and reproducing information from the magneto-optical disk 2.

An optical head 4 is disposed with respect to one recording surface of the magneto-optical disk 2, while a magnetic head 5 is disposed with respect to the other recording surface of the magneto-optical disk 2. The optical head 4 and the magnetic head 5 confront each other via the magneto-optical disk 2.

At the time of the recording, a laser beam emitted from the optical head 4 irradiates and heats the magneto-optical disk 2. On the other hand, a magnetic field is applied on the magneto-optical disk 2 by the magnetic head 5, and a position on the magneto-optical disk 2 irradiated by the laser beam is magnetized by the magnetic field applied from the magnetic head 5. At the time of the reproduction, a laser beam emitted from the optical head 4 is irradiated on the magneto-optical disk 2, and information recorded on the magneto-optical disk 2 is reproduced by detecting a magnetization state of the magneto-optical disk 2 depending on a reflected laser beam from the magneto-optical disk 2.

FIG. 2 is a diagram showing the magneto-optical disk used in the first embodiment. FIG. 3 is a cross sectional view of an important part of the magneto-optical disk used in the first embodiment.

As shown in FIG. 2, a spiral track 6 is formed in advance on the magneto-optical disk 2, and information is recorded on this track 6 by inverting the magnetization direction. The track 6 is formed by arranging a land 7 and a groove 8 adjacent to each other as shown in FIG. 3. For the sake of convenience, the magneto-optical disk employs a land-groove recording system which records information on both the land and the groove in order to realize a large storage capacity. However, the magneto-optical disk may employ a land recording system which records the information on only the land, for example.

The magneto-optical disk 2 is made by forming a magnetic thin film 10 on a disk-shaped substrate 9 having the land 7 and the groove 8 which are formed on the substrate 9 in a spiral manner, and forming a transparent protection layer 11 on the magnetic thin film 10.

The laser beam output from the optical head 4 is irradiated on the land 7 when recording the information on the land 7 and when reproducing the information from the land 7. Similarly, the laser beam output from the optical head 4 is irradiated on the groove 8 when recording the information on the groove 8 and when reproducing the information from the groove 8.

FIG. 4 is a diagram showing the construction of the optical head of the first embodiment.

The optical head 4 has a known construction, and emits the laser beam from a semiconductor laser 12. The laser beam emitted from the semiconductor laser 12 is supplied to a collimator lens 13. The collimator lens 13 converts the laser beam from the semiconductor laser 12 into parallel light.

The parallel laser beam from the collimator lens 13 is supplied to a beam shaping prism 14. The beam shaping prism 14 shapes the cross sectional shape of the parallel laser beam from the collimator lens 13 into a circular shape.

The shaped laser beam from the beam shaping prism 14 is supplied to a polarization beam splitter 15. The polarization beam splitter 15 passes a predetermined polarized light component of the shaped laser beam from the beam shaping prism 14. The light of the polarization angle selected by the polarization beam splitter 15 is supplied to an objective lens 16.

The light supplied to the objective lens 16 is converged by the objective lens 16 and is supplied to the magneto-optical disk 2. The laser beam irradiated on the magneto-optical disk 2 is reflected at the land 7 and the groove 8 of the magneto-optical disk 2. The reflected laser beam from the magneto-optical disk 2 is supplied to the polarization beam splitter 15 via the objective lens 16.

When data is recorded on the magneto-optical disk 2, the polarization angle of the reflected laser beam from the magneto-optical disk 2 is rotated by an angle θk due to the Kerr effect. In other words, if the component of the laser beam irradiated on the magneto-optical disk 2 is the p-polarized light component, the polarization angle of the reflected laser beam rotates by the angle θk due to the Kerr effect, and a s-polarized light component is slightly generated.

The polarization beam splitter 15 reflects the reflected laser beam from the magneto-optical disk 2 received via the objective lens 16, and supplies the reflected laser beam to a polarization beam splitter 17. The polarization beam splitter 17 reflects the reflected laser beam from the polarization beam splitter 15 in a predetermined direction, and also passes a predetermined polarized light component of this reflected laser beam.

The laser beam reflected by the polarization beam splitter 17 is supplied to a 1/2 wave plate 18. The 1/2 wave plate 18 rotates the polarization of the laser beam received from the polarization beam splitter 17 by 45 degrees.

The laser beam with the polarization rotated by 45 degrees by the 1/2 wave plate 18 is supplied to a focusing lens 19.

The laser beam converged by the focusing lens 19 is supplied to a polarization beam splitter 20. The polarization beam splitter 20 separates the laser beam from the focusing lens 19 depending on predetermined polarization angles.

One beam separated by the polarization beam splitter 20 is supplied to a photodetector 21, and another beam separated by the polarization beam splitter 20 is supplied to a photodetector 22. The photodetector 21 detects an intensity of the light supplied from the polarization beam splitter 20, and detects the information recorded on the land 7 or the groove 8. On the other hand, the photodetector 22 detects an intensity of the light supplied from the polarization beam splitter 20, and detects the information recorded on the groove 8 or the land 7.

Accordingly, the reflected laser beam from the magneto-optical disk 2 passes through the polarization beam splitters 15 and1 17, the 1/2 wave plate 18 and the focusing lens 19, separated into the s-polarized light component and the p-polarized light component by the polarization beam splitter 20, and supplied to the photodetectors 21 and 22. Hence, s-polarized and p-polarized light component signals respectively dependent upon the s-polarized light component and the p-polarized light component of the reflected laser beam from the magneto-optical disk 2 are output from the photodetectors 21 and 22. The information recorded on the magneto-optical disk 2 is detected by obtaining a difference between the s-polarized light component signal and the p-polarized light component signal output from the photodetectors 21 and 22.

On the other hand, the laser beam passed through the polarization beam splitter 17 is supplied to a focusing lens 23. The focusing lens 23 converges the laser beam supplied from the polarization beam splitter 17. The focusing lens 23 supplies the converged laser beam to a beam splitter 24. This beam splitter 24 separates the laser beam from the focusing lens 23 in two directions.

One beam separated by the beam splitter 24 is supplied to a photodetector 26 via a knife edge 25. The photodetector 26 is made up of a 4-part detector having 4 detector parts which output detection signals dependent upon a shape of the laser beam irradiated on the 4 detector parts. The 4 detection signals output from the photodetector 26 are supplied to a focus error operation circuit. The focus error operation circuit generates a focus error signal based on the 4 detection signals received from the photodetector 26.

On the other hand, another beam separated by the beam splitter 24 is supplied to a photodetector 27. The photodetector 27 is made up of a 2-part detector having 4 detector parts, and outputs 2 detection signals. A tracking error signal is generated based on the 2 detection signals output from the photodetector 27 according to the push-pull technique. A 0th order light irradiated on the magneto-optical disk 2 is reflected as a 0th order reflected light at the land 7 or the groove 8 on which the 0th order light is to make the tracking. In addition, +1st and -1st order diffraction lights are also generated. Hence, a predetermined pattern made up of the 0th order light and the +1st and -1st order lights is irradiated on the photodetector 27.

FIG. 5 is a diagram showing an optical pattern on the photodetector in this first embodiment.

The optical pattern shown in FIG. 5 is formed on the photodetector 27. In FIG. 5, the pattern of the 0th order light is generated at the central part, while the patterns of the +1st and -1st order lights are generated on both sides of the central part. The patterns of the +1st and -1st order lights are symmetrical to the right and left when the laser beam irradiated on the magneto-optical disk 2 scans the center of the desired land 7 or groove 8 on the magneto-optical disk 2. However, the patterns of the +1st and -1st order lights become asymmetrical to the right and left if the scan of the laser beam deviates from the center of the desired land 7 or groove 8 on the magneto-optical disk 2, depending on the direction and the amount of the deviation from the center.

Hence, by detecting the light intensity of the pattern shown in FIG. 5 on both the right and left sides with respect to a center axis C and obtaining a difference therebetween, it is possible to obtain an amount of error in the scan position of the laser beam irradiated on the magneto-optical disk 2 with respect to the desired land 7 or groove 8. In other words, it is possible to obtain a tracking error signal from this difference. A tracking control is carried out based on the tracking error signal.

FIG. 5 shows the pattern for a case where the laser beam emitted from the optical head 4 is irradiated perpendicularly with respect to the recording surface of the magneto-optical disk 2. If the laser beam emitted from the optical head 4 is irradiated at an incident angle other than 90 degrees with respect to the recording surface of the magneto-optical disk 2, interferences of the 0th order light and the +1st and -1st order lights occur, thereby causing interference fringes in the pattern irradiated on the photodetector 27.

FIG. 6 is a diagram showing an optical pattern on the photodetector for a case where the incident angle of the laser beam is not 90 degrees in the first embodiment.

As shown in FIG. 6, when an optical axis of the laser beam irradiated on the recording surface of the magneto-optical disk 2 from the optical head 4 is incident at an angle other than 90 degrees, the interferences of the 0th order light and the +1st and -1st order lights occur, thereby causing the interference fringes in patterns of the +1st and -1st order lights of the laser beam irradiated on the photodetector 27. The interference fringes form a pattern having a period dependent on the angle formed between the optical axis of the laser beam emitted from the optical head 4 and the recording surface of the magneto-optical disk 2 which receives this laser beam. The interference fringes increase as this angle formed between the optical axis of the laser beam irradiated on the magneto-optical disk 2 and the recording surface of the magneto-optical disk 2 deviates more from 90 degrees.

The light supplied to the photodetector 27 decreases when the interference fringes increase. Thus, it is possible to recognize the extent of the interference fringes from the detection signals output from the photodetector 27. Therefore, it is possible to recognize the angle formed between the optical axis of the laser beam emitted from the optical head 4 and the recording surface of the magneto-optical disk 2 which receives this laser beam, based on the detection signals output from the photodetector 27.

For example, according to the push-pull technique, a difference between the patterns on the right and the left is detected for the 0th order light and the +1st and -1st order lights irradiated on the magneto-optical disk 2 with the so-called ball-shaped patterns shown in FIGS. 5 and 6. In general, if an area of the regions where the 0th order light and the +1st and -1st order lights overlap is denoted by S1, an area of the region of only the 0th order light is denoted by S0, a moving quantity with respect to the track width is denoted by v, and the track pitch is denoted by T, a light intensity $I_R$ obtained at the right detector part of the photodetector 27 and a light intensity $I_L$ obtained at the left detector part of the photodetector 27 can respectively be described by the following formulas (1) and (2).

$$\begin{aligned} I_R &= S0 \cdot E0^2 + S_1 \cdot [E0 + E1\exp\{i \cdot \phi 1 + i \cdot (2\pi v/T)\}]^2 \\ &= A + B \cdot \cos(\phi 1 + 2\pi v/T) \end{aligned} \quad (1)$$

$$I_L = A + B \cdot \cos(\phi 1 - 2\pi v/T) \quad (2)$$

When the objective lens 16 is inclined with respect to the magneto-optical disk 2, coma aberration is dominant in the beam spot formed on the magneto-optical disk 2. A coma aberration W(X, Y) in this case can be described by the following formula (3).

$$W(X, Y) = \rho^3 \cdot \cos\theta \quad (3)$$

In this case, the tracking error signal is obtained by adding the coma aberration component described by the formula (3) to the formulas (1) and (2), and the following formulas (4) and (5) stand.

$$I_R = A + B \cdot \cos(\phi 1 + \rho^3 \cdot \cos\theta + 2\pi v/T) \quad --- \quad (4)$$

$$I_L = A + B \cdot \cos(\phi 1 + \rho^3 \cdot \cos\theta - 2\pi v/T) \quad (5)$$

In this state, dark and bright portions of the interference fringes are generated in the respective ball-shaped images.

In general, the interference fringes generated in the ball-shaped images are generated under the conditions where angular components in the formulas (4) and (5) are as described by the following formulas (6) and (7).

$$\phi 1+\rho^3 \cdot \cos\theta + 2\pi v/T = 2\pi \cdot m \quad (m=0, \pm 1, \pm 2, \ldots) \qquad \text{--- (6)}$$

$$\phi 1+\rho^3 \cdot \cos\theta - 2\pi v/T = 2\pi \cdot n \quad (n=0, \pm 1, \pm 2, \ldots) \qquad (7)$$

The amplitude of the tracking error signal decreases by the generation of the interference fringes.

Accordingly, when the tracking error signal is described by ($I_R$-$I_L$), it is possible to detect a relative inclination of the objective lens 16 and the magneto-optical disk 2 from a decrease in the tracking error signal amplitude, by obtaining the tracking error signal amplitude using the following formula (8).

$$\text{Tracking Error Signal Amplitude} = (I_R - I_L)/(I_R + I_L) \qquad (8)$$

FIG. 7 is a diagram showing a objective lens tilt angle versus tracking error signal characteristic of the first embodiment.

When an optical system is actually formed using an objective lens with a NA of 0.55 and wavelength of 680 nm, and the recording surface of the magneto-optical disk 2 and the objective lens 16 are set parallel to each other, a tracking error signal having an amplitude corresponding to a voltage amplitude of 1000 mV is obtained as shown in FIG. 7.

On the other hand, when the objective lens 16 is inclined by 60 minutes, that is, 1 degree, with respect to the magneto-optical disk 2, a tracking error signal having an amplitude corresponding to a voltage amplitude of 600 mV is obtained as shown in FIG. 7.

It is possible to carry out a satisfactory signal detection by controlling the inclination of the objective lens 16 so that the tracking error signal amplitude described by the formula (8) increases, that is, so that the tracking error signal having the amplitude corresponding to the voltage amplitude of 1000 mV is obtained.

A description will now be given by referring back to the construction of the first embodiment shown in FIG. 1.

In FIG. 1, the tracking error signal obtained from the optical head 4 is used for the tracking control, and is also supplied to a tracking error signal (TES) amplitude detecting circuit 28. The tracking error signal amplitude detecting circuit 28 obtains a normalized amplitude of the tracking error signal described by the formula (8), based on the signals which are obtained from the photodetector 27 of the optical head 4 and correspond to the light intensities $I_R$ and $I_L$ described by the formulas (4) and (5).

A signal corresponding to the normalized amplitude obtained from the tracking error signal amplitude detecting circuit 28 is supplied to an operation circuit 29. The operation circuit 29 carries out a processing including a noise elimination process with respect to the signal obtained from the tracking error signal amplitude detecting circuit 28.

The signal which is eliminated of the noise, that is, an error component, is supplied from the operation circuit 29 to a signal hold circuit 30. The signal hold circuit 30 holds the signal received from the operation circuit 29.

The signal held in the signal hold circuit 30 is supplied to a driving amplifier 31. The driving amplifier 31 subjects the signal received from the signal hold circuit 30 to a D.C. amplification so as to obtain a driving voltage.

The driving voltage from the driving amplifier 31 is supplied to a D.C. detecting circuit 33. The D.C. detecting circuit 33 generates a signal which is supplied to a tilt driving mechanism 34 based on the driving voltage. The tilt driving mechanism 34 is used in common for the focus control. The tilt driving mechanism 34 is driven in response to the driving signal received from the D.C. detecting circuit 33, and controls the tilt, that is, the inclination, of the objective lens 16 with respect to the magneto-optical disk 2.

FIG. 8 is a plan view showing the tilt driving mechanism of this first embodiment. FIG. 9 is a side view showing the tilt driving mechanism of the first embodiment. In addition, FIG. 10 is a plan view showing an important part of the tilt driving mechanism of this first embodiment.

In the tilt driving mechanism 34, the optical head 4 is guided by a pair of guide rails 35, and is coarsely driven in a radial direction A of the magneto-optical disk 2 by a carriage 36. A driving force for carrying out this coarse drive is obtained via a known magnetic circuit which is made up of carriage coils 37, magnets 38 and back yokes 39.

The optical head 4 is coupled to the carriage 36 via a pair of support springs 46, and is supported in a state free to sway in directions A and B.

In the optical head 4, the objective lens 16 is finely driven in the radial direction A of the magneto-optical disk 2 to carry out a tracking control with respect to a desired track on the magneto-optical disk 2. A driving force for carrying out this fine drive is obtained via a magnetic circuit made up of tracking coils 40 mounted on the optical head 4, magnets 41 mounted on the carriage 36 and back yokes 42.

The objective lens 16 is driven in the direction B which is perpendicular to the recording surface of the magneto-optical disk 2, in order to carry out the focus control of the laser beam irradiated with respect to the desired track on the magneto-optical disk 2. A driving force for carrying out this focus control is obtained via a magnetic circuit which is made up of focus coils 43 provided at a plurality of positions in the periphery of the objective lens 16 of the optical head 4, magnets 44 mounted on the carriage 36 and back yokes 45.

A plurality of driving signals which are generated in the D.C. detecting circuit 33 depending on the tracking error signal amplitude obtained based on the formula (8) are independently supplied to the focus coils of the magnetic circuit which is made up of the focus coils 43 provided at the plurality of positions in the periphery of the objective lens 16 of the optical head 4, the magnets 44 mounted on the carriage 36 and the back yokes 45.

By supplying the driving signal independently to the focus coils 43, the objective lens 16 is controlled so that different positions on the periphery of the objective lens are moved by different amounts in the direction B which is perpendicular to the recording surface of the magneto-optical disk 2. As a result, the objective lens 16 is driven and controlled so that the objective lens 16 becomes parallel to the recording surface of the magneto-optical disk 2.

Accordingly, this first embodiment uses the characteristic that the detection signals output from the photodetector 27 which detects the tracking error change due to the interference fringes which are generated by the relative inclination of the magneto-optical disk 2 and the objective lens 16, and detects the relative inclination of the magneto-optical disk 2 and the objective lens 16 based on the detection signals output from the photodetector 27. Further, the driving signals are independently supplied to the known plurality of focus coils 43 which are arranged at the plurality of positions in the periphery of the objective lens 16, so as to control the inclination angle of the objective lens 16 by moving the peripheral parts of the objective lens 16 by different amounts in the direction of the magneto-optical disk 2. As a result, it is possible to control the objective lens 16 and the magneto-optical disk 2 to become parallel to each other, without the need to provide a special means exclusively for such a control. For this reason, the weight of the optical head 4 will not increase, and it is unnecessary to sacrifice the response speed of the optical head 4 for the control of the relative inclination angle of the objective lens 16 and the magneto-optical disk 2. In addition, since it is possible to prevent the space occupied by the optical head 4 from increasing, it is possible to prevent the size of the optical information storage unit from increasing.

Of course, the optical head 4 need not include all of the elements of the optical system shown in FIG. 4.

In addition, although the present invention is applied to the magneto-optical disk unit in this embodiment, the recording medium is of course not limited to the magneto-optical disk, and the present invention is similarly applicable to any general optical recording mediums such as CD, CD-ROM and PD.

Furthermore, this embodiment controls the inclination angle of the objective lens 16 with respect to the magneto-optical disk 2 by controlling the currents supplied to the plurality of focus coils 43, in order to control the relative angle between the objective lens 16 and the magneto-optical disk 2. However, it is of course possible to control the inclination angle of the magneto-optical disk 2 with respect to the objective lens 16.

FIG. 11 is a system block diagram showing a second embodiment of the optical information storage unit according to the present invention. In FIG. 11, those parts which are the same as those corresponding parts in FIG. 1 are designated by the same reference numerals, and a description thereof will be omitted.

In this second embodiment, the object driven by the tilt driving mechanism is different from that of the first embodiment described above.

In this second embodiment, a tilt driving mechanism 100 controls the angle of the spindle motor 3 in response to a driving signal supplied from the D.C. detecting circuit 33.

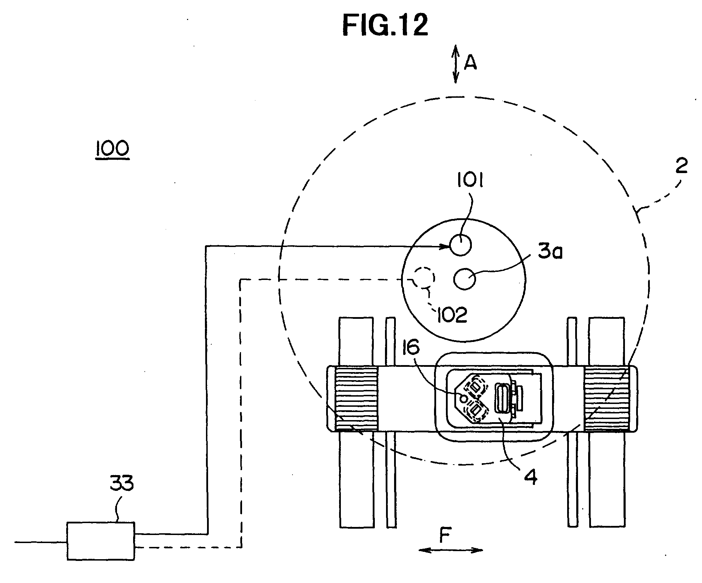

FIG. 12 is a plan view showing the tilt driving mechanism of the second embodiment of the optical information storage unit. In FIG. 12, those parts which are the same as those corresponding parts in FIG. 8 are designated by the same reference numerals, and a description thereof will be omitted.

In this second embodiment, the tilt driving mechanism 100 has a piezoelectric element 101 located at a position shifted in the direction A from the shaft 3a of the spindle motor 3. The piezoelectric element 101 is displaced in an axial direction of the shaft 3a of the spindle motor 3 in response to a signal from the D.C. detecting circuit 33, so as to control the inclination of the recording surface of the magneto-optical disk 2.

According to this embodiment, it is possible to control and maintain the objective lens 16 and the magneto-optical disk 2 parallel to each other, by controlling the inclination of the recording surface of the magneto-optical disk 2 by the tilt driving mechanism 100. In this case, the construction of the optical head 4 may be the same as the conventional optical head, similarly as in the case of the first embodiment described above. Hence, this embodiment can also obtain effects similar to those obtainable in the first embodiment.

The first and second embodiments detect and control the relative inclination of the objective lens 16 and the magneto-optical disk 2 in the radial direction of the magneto-optical disk 2. However, it is of course possible to similarly control the relative inclination in a circumferential direction of the magneto-optical disk 2.

If the magneto-optical disk 2 tilts in the circumferential direction thereof in FIGS. 5 and 6, the patterns shown in FIGS. 5 and 6 become asymmetrical in the direction of the track. In this case, instead of using a 2-part detector for the photodetector 27, a 4-part detector may be used so as to obtain a difference of the detection signals from the photodetector 27 in the direction of the track with respect to the patterns shown in FIGS. 5 and 6.

Further, in this case, it is possible to control the objective lens 16 using the optical head 4 having the same construction as the conventional optical head 4 shown in FIGS. 8 through 10 used in the first embodiment. This is because the objective lens 16 tilts in directions D1 and D2 by independently controlling the signals supplied to the focus coils 43 of the optical head 4, thereby making it possible to not only control the inclination in the direction A but also the inclination in the direction E.

On the other hand, in the second embodiment which controls the inclination of the spindle motor 3, it is possible to provide a piezoelectric element 102 on the shaft 3a of the spindle motor 3 in addition to the piezoelectric element 101, as indicated by a phantom line in FIG. 12. This piezoelectric element 102 can be displaced in a direction F perpendicular to the direction A.

Therefore, the jitter in the circumferential direction of the magneto-optical disk 2 can be improved by the above described measures.

Further, the present invention is not limited to these embodiments, but various variations and modifications may be made without departing from the scope of the present invention.

## Claims

1. An optical information storage unit comprising a light source emitting a light, an objective lens imaging the light emitted from said light source on a recording medium, a servo detecting means for detecting a servo detection signal based on a reflected light from the recording medium, and a servo control means for controlling an imaging position of the light on the recording medium based on the servo detection signal, characterized by:

   an inclination control means for controlling a relative inclination of the recording medium and the objective lens, by controlling said servo control means based on the servo detection signal detected by said servo detecting means.

2. The optical information storage unit as claimed in claim 1, characterized in that said inclination control means controls the relative inclination of the recording medium and the objective lens based on the servo detection signal detected by said servo detecting means so that an amplitude of the servo detection signal becomes a maximum.

3. The optical information storage unit as claimed in claim 1 or 2, characterized in that said inclination control means controls the relative inclination of the recording medium and the objective lens depending on a normalized amplitude of the servo detection signal detected by said servo detecting means.

4. The optical information storage unit as claimed in any of claims 1 to 3, characterized in that said inclination control means controls the relative inclination of the recording medium and the objective lens depending on a normalized jitter quantity of the recording medium by detecting and normalizing a jitter quantity of the recording medium, based on the servo detection signal detected by said servo detecting means.

5. The optical information storage unit as claimed in any of claims 1 to 4, characterized in that said inclination control means controls a focus direction of the objective lens, a direction of a track formed on the recording medium, and an inclination of the recording medium in a radial direction of the recording medium, based on the servo detection signal detected by said servo detecting means.

6. The optical information storage unit as claimed in any of claims 1 to 5, characterized in that:

   said servo control means includes a plurality of driving means for driving ends of the objective lens in a direction of the recording medium, and
   said inclination control means controls the relative inclination of the recording medium and the objective lens by independently driving said plurality of driving means.

7. The optical information storage unit as claimed in any of claims 1 to 6, characterized in that said inclination control means controls the relative inclination of the recording medium and the objective lens by controlling an inclination of the objective lens.

**8.** An optical information storage unit comprising a light source emitting a light, an objective lens imaging the light emitted from said light source on a recording medium, a servo detecting means for detecting a servo detection signal based on a reflected light from the recording medium, a servo control means for controlling an imaging position of the light on the recording medium based on the servo detection signal, and a rotating means for rotating the recording medium, characterized by:

an inclination control means for controlling a relative inclination of the recording medium and the objective lens, by controlling an inclination of said rotating means based on the servo detection signal detected by said servo detecting means.

**9.** The optical information storage unit as claimed in claim 8, characterized in that said inclination control means controls the relative inclination of the recording medium and the objective lens based on the servo detection signal detected by said servo detecting means so that an amplitude of the servo detection signal becomes a maximum.

**10.** The optical information storage unit as claimed in claim 8 or 9, characterized in that said inclination control means controls the relative inclination of the recording medium and the objective lens depending on a normalized amplitude of the servo detection signal detected by said servo detecting means.

**11.** The optical information storage unit as claimed in any of claims 8 to 10, characterized in that said inclination control means controls the relative inclination of the recording medium and the objective lens depending on a normalized jitter quantity of the recording medium by detecting and normalizing a jitter quantity of the recording medium, based on the servo detection signal detected by said servo detecting means.

**12.** The optical information storage unit as claimed in any of claims 8 to 11, characterized in that said inclination control means controls a focus direction of the objective lens, a direction of a track formed on the recording medium, and an inclination of the recording medium in a radial direction of the recording medium, based on the servo detection signal detected by said servo detecting means.

FIG. 1

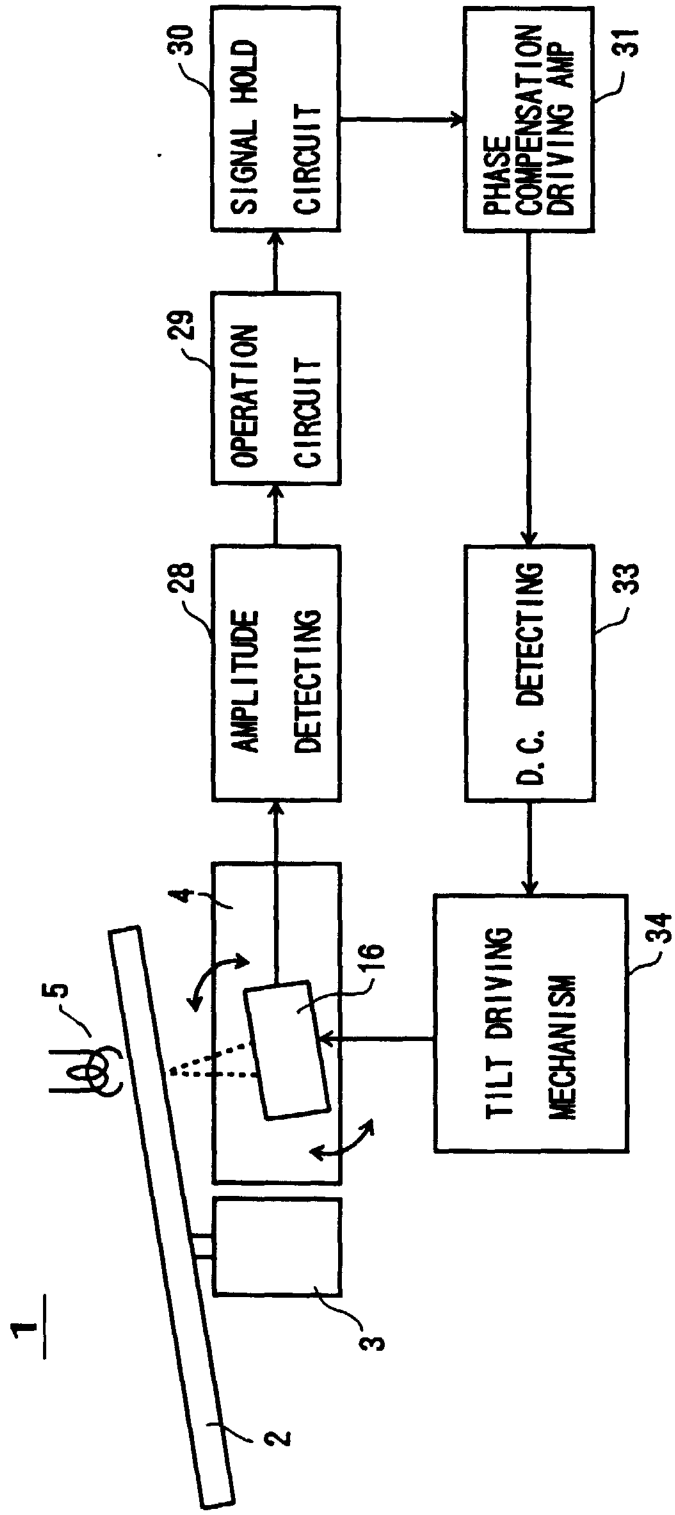
1
2
3
5
4
16
AMPLITUDE DETECTING
28
OPERATION CIRCUIT
29
SIGNAL HOLD CIRCUIT
30
PHASE COMPENSATION DRIVING AMP
31
D.C. DETECTING
33
TILT DRIVING MECHANISM
34

FIG.2

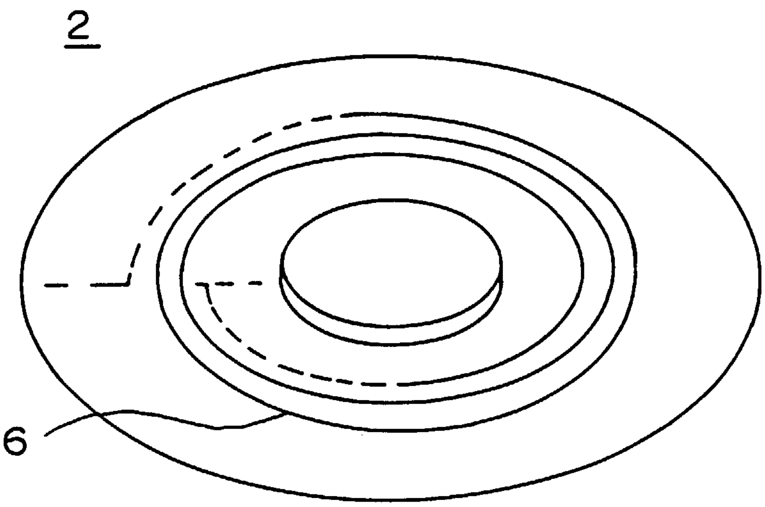


FIG.3

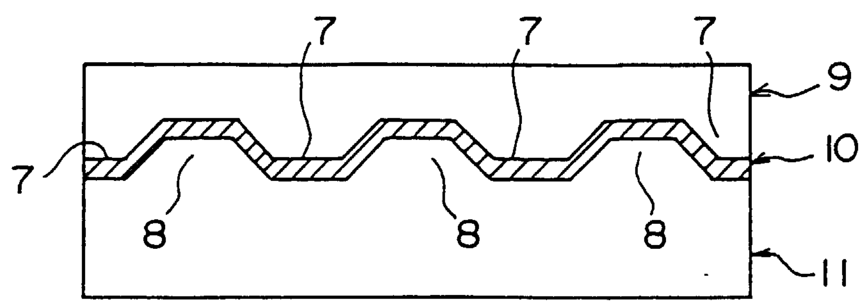

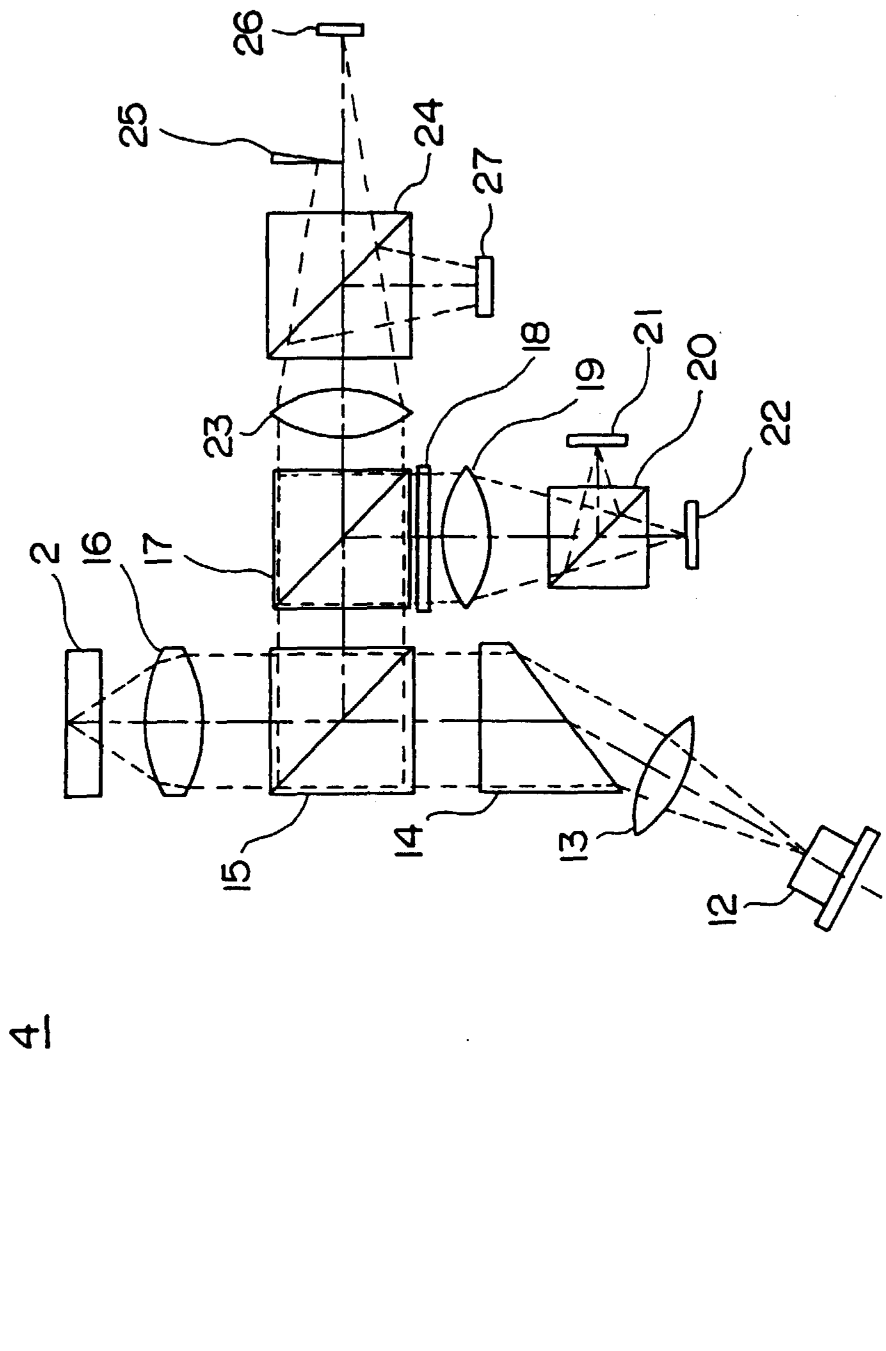

FIG.4

FIG.5

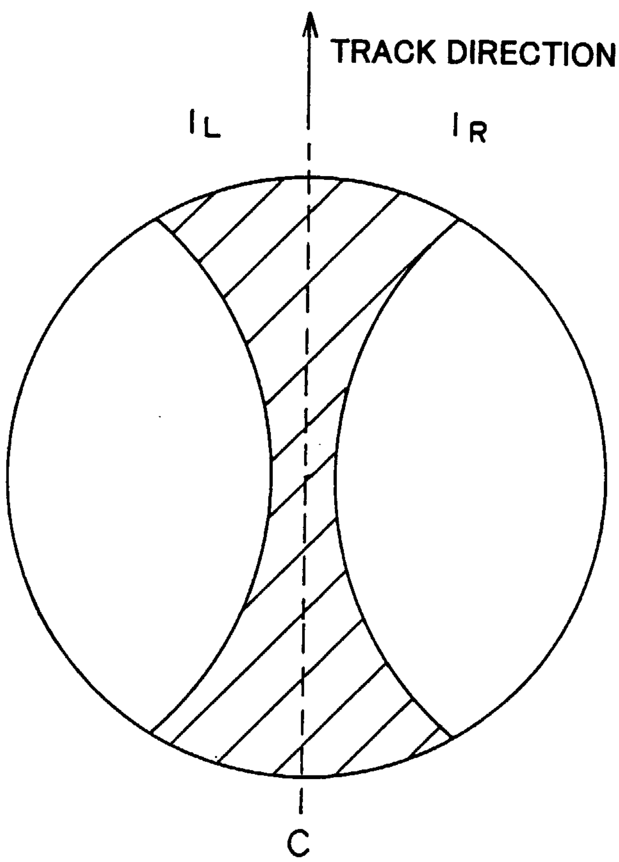

FIG.6

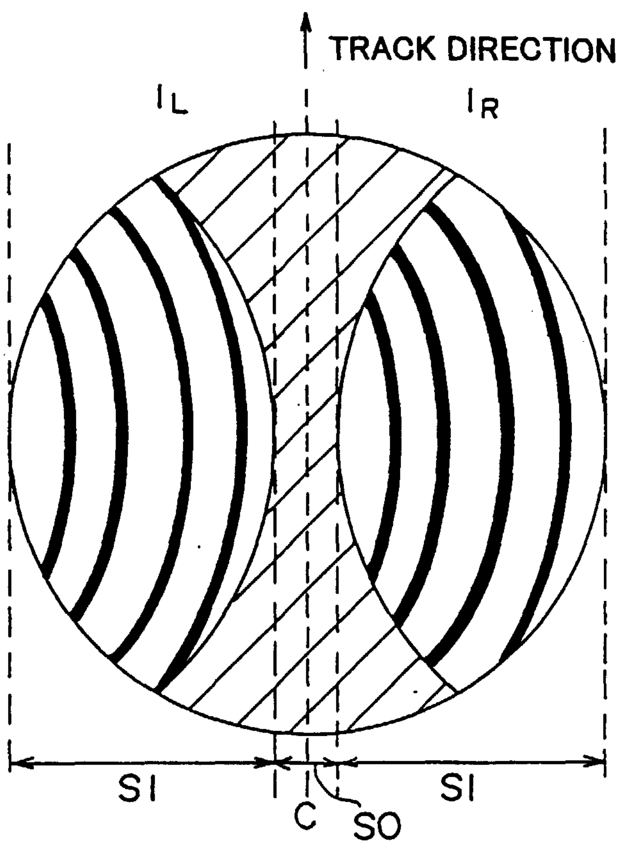

FIG.7

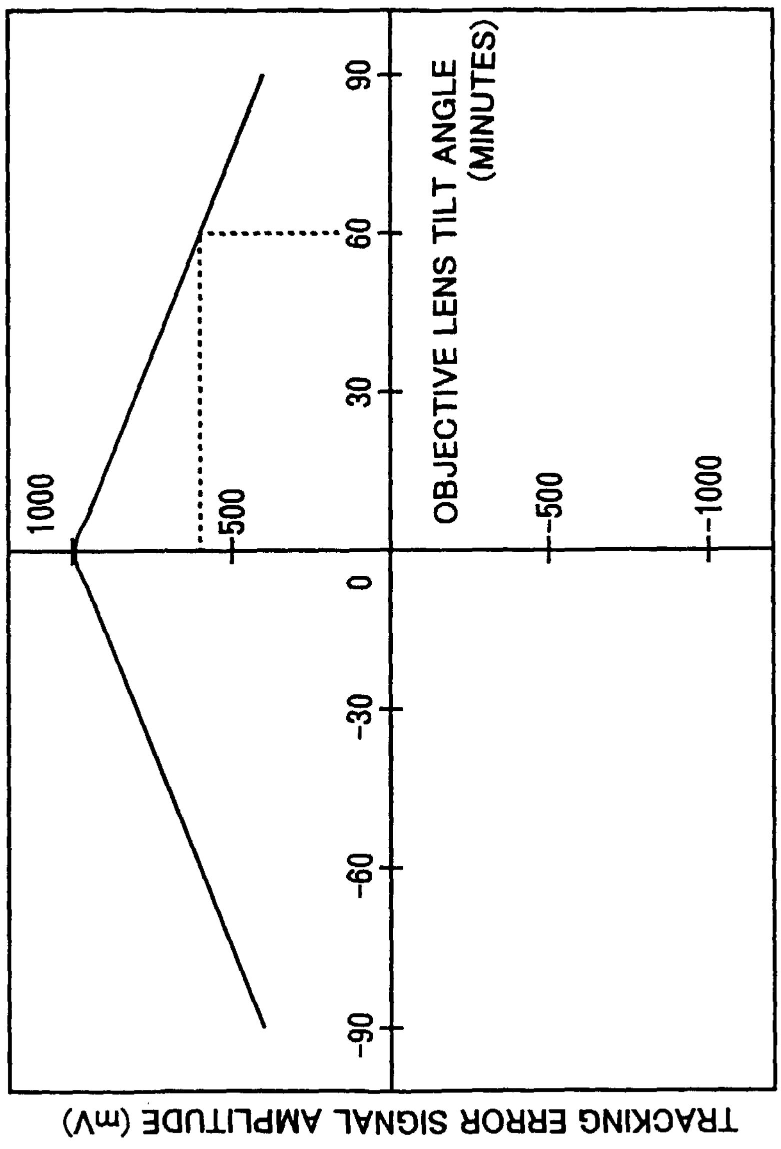
TRACKING ERROR SIGNAL AMPLITUDE (mV)
1000
500
-500
-1000
OBJECTIVE LENS TILT ANGLE
(MINUTES)
-90
-60
-30
0
30
60
90

FIG.8

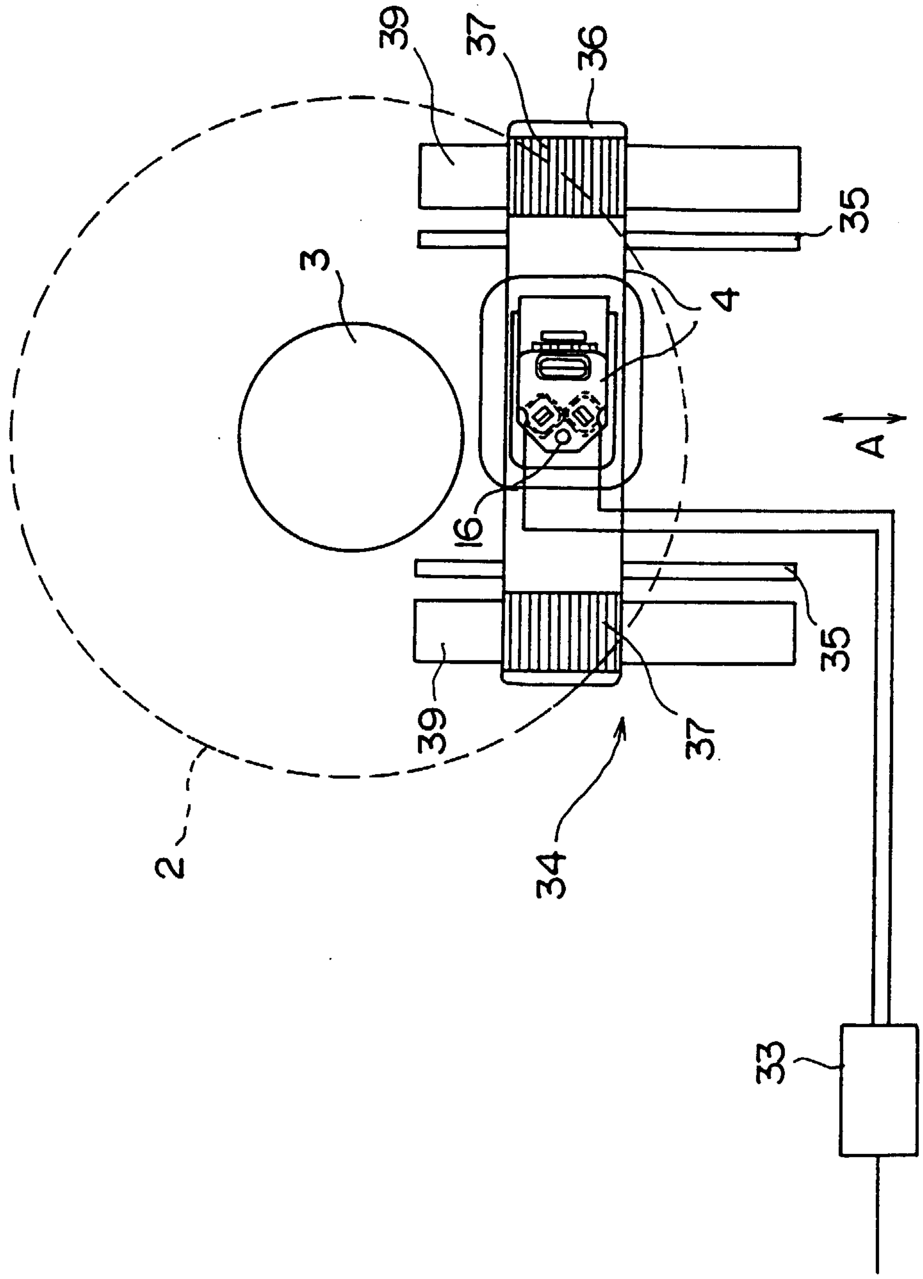

FIG.9

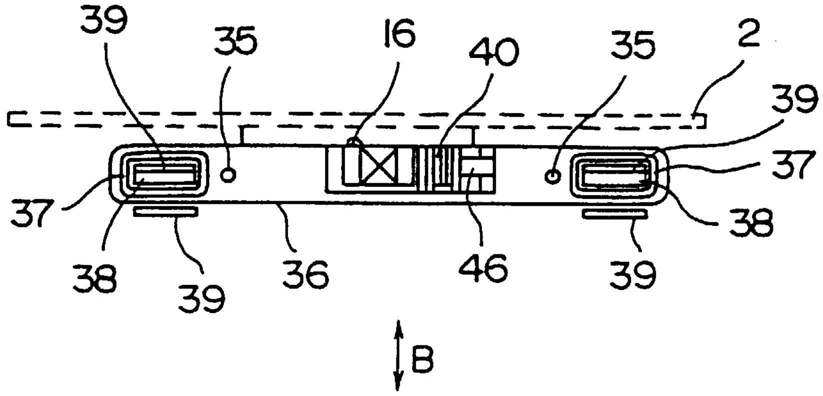
39
35
16
40
35
2
39
37
37
38
38
39
36
46
39
B

FIG.10

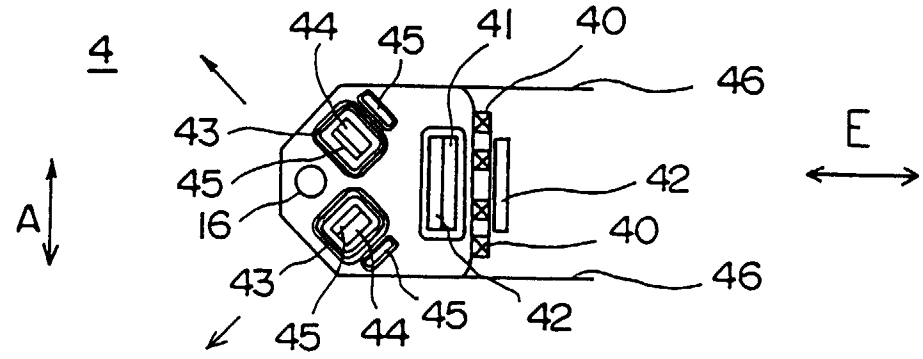
4
44
45
41
40
46
43
E
45
42
16
A
40
43
46
45
44
45
42

FIG. 11

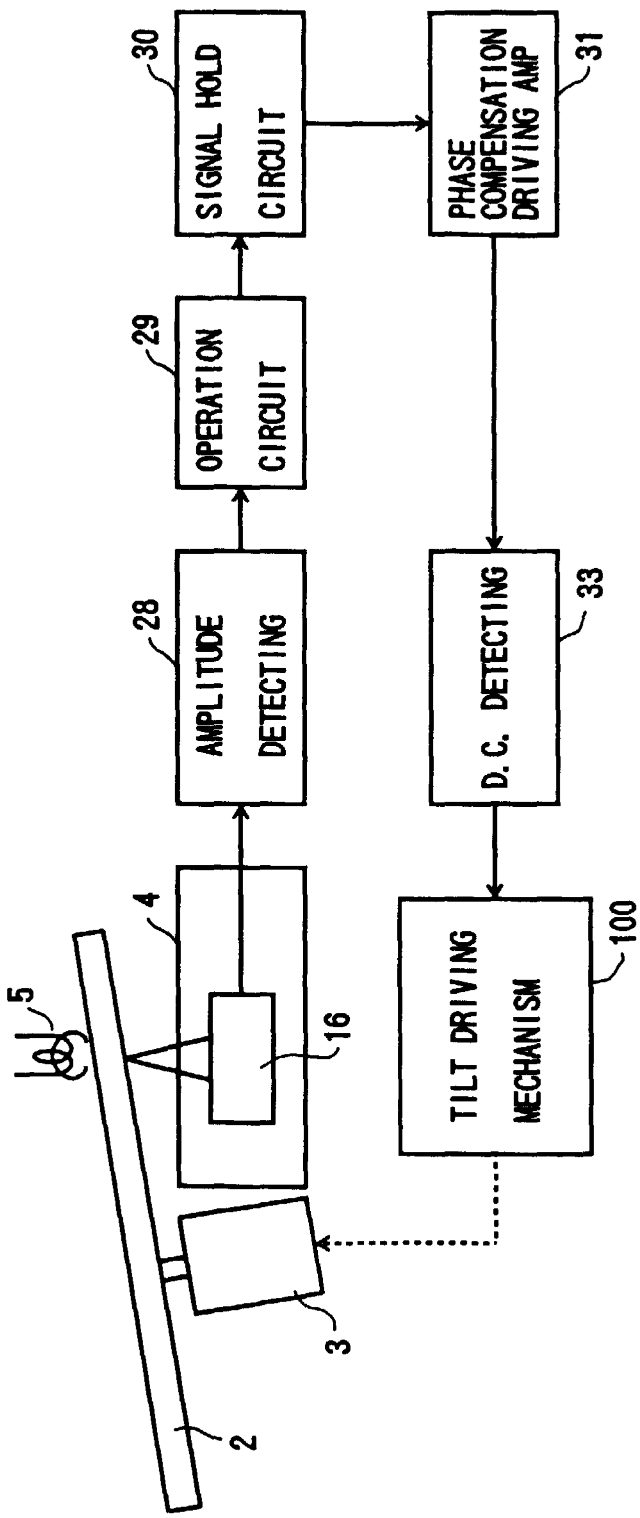
SIGNAL HOLD CIRCUIT
30
OPERATION CIRCUIT
29
AMPLITUDE DETECTING
28
PHASE COMPENSATION DRIVING AMP
31
D.C. DETECTING
33
TILT DRIVING MECHANISM
100
5
4
16
3
2

FIG.12